# EUROPÄISCHE PATENTSCHRIFT

(11) **EP 0 601 140 B1**
(45) Veröffentlichungstag und Bekanntmachung des Hinweises auf die Patenterteilung: **30.06.1999**
(21) Anmeldenummer: 93908949.6
(22) Anmeldetag: 16.04.1993
(51) Int. Cl.: G01N 1/34, B01D 43/00, B01D 21/00

(54) **TRENNVORRICHTUNG ZUR ABSCHEIDUNG EINES ANALYSENPROBENSTROMS AUS ABWASSER**
SEPARATING DEVICE FOR SEPARATING A FLOW OF ANALYSIS SAMPLES FROM WASTE WATER
DISPOSITIF VISANT A SEPARER UN FLUX D'ECHANTILLONS D'ANALYSE DANS DES EAUX USEES

(30) Priorität: 25.06.1992 DE 4220897
(43) Veröffentlichungstag der Anmeldung: 15.06.1994
(73) Patentinhaber: ISCO, Inc., Lincoln Nebraska 68504 (US)
(72) Erfinder: Siepmann, Friedrich Wilhelm, 64823 Gross-Umstadt (DE); Teutscher, Michael, 64354 Reinheim (DE)
(74) Vertreter: Katscher, Helmut, Dipl.-Ing.
(86) Internationale Anmeldenummer: EP9300922
(87) Internationale Veröffentlichungsnummer: WO9400747

(56) Entgegenhaltungen:
- EP-A- 64 828
- EP-A- 96 754
- DE-A- 2 333 008
- FR-A- 2 525 771

## Beschreibung

Die Erfindung betrifft eine Trennvorrichtung zur Abscheidung eines Analysenprobenstroms aus Abwasser mit einem vom Abwasser durchflossenen Abscheidebehälter, der einen Abwasserzulauf, einen Abwasserablauf und eine Trennwand mit mindestens einer Abscheideöffnung für den Durchtritt des Analysenprobenstroms aufweist, wobei der Abwasserstrom den Abschneidebehälter im wesentlichen in einer Umfangsströmung durchfließt.

Für die Analyse von Abwasser, beispielsweise die Ammoniakanalyse, ist es erforderlich, im Abwasser mitgeführte Verunreinigungen, insbesondere gröbere Feststoffe, Öle und Fette sowie Mikroorganismen von den für die Analyse verwendeten Analysensonden fernzuhalten, um Störungen zu vermeiden. Insbesondere ionenselektive Analysensonden, wie sie für die Ammoniakanalyse verwendet werden, sind besonders empfindlich gegen Fette und Öle.

Da der Analysenprobenstrom üblicherweise mit Reagenzflüssigkeiten in einem vorgegebenen Mischungsverhältnis gemischt wird, soll der Analysenprobenstrom möglichst klein gehalten werden, um den Bedarf an Reagenzflüssigkeit einzuschränken und Entsorgungsprobleme zu vermeiden. Die Einstellung eines möglichst kleinen Analysenprobenstroms macht es aber erforderlich, den Leitungsquerschnitt der vom Analysenprobenstrom durchflossenen Leitungen möglichst klein zu wählen, damit die Verweildauer des Analysenprobenstroms in diesen Leitungen so niedrig ist, daß die Zeitverzögerung für die Analyse möglichst gering ist. Damit werden die Leitungen sehr anfällig gegen Verstopfung durch Organismenbewuchs.

Auch wenn die Analyse des Abwassers einen Verbrennungsvorgang in einem nachgeschalteten Ofen umfaßt, wie dies für eine Kohlenstoffanalyse üblich ist, ist man aus den oben genannten Gründen bestrebt, die Menge des Analysenprobenstroms möglichst gering zu halten und den Energiebedarf für den Betrieb des Analysenofens und den Aufwand für die nachgeschalteten Analysenteile herabzusetzen.

Unter Berücksichtigung dieser teilweise einander entgegengesetzten Forderungen wird als herkömmliches Verfahren für die Probenaufbereitung für die Abwasseranalyse die Ultrafiltration gewählt. Hierbei strömt ein verhältnismäßig großer Abwasserstrom von beispielsweise 3-8 m³/h unter hohem Druck an einer Filterfläche mit sehr geringer Filterporenweite vorbei, wobei unter hohen Druckverlusten ein sehr kleiner Analysenprobenstrom von beispielsweise 100-500 ml/h hindurchtritt und der Analyse zugeführt wird. Die für die Ultrafiltration verwendeten Filter müssen in regelmäßigen Zeitabständen von beispielsweise einer bis vier Wochen gründlich mit Lauge gereinigt werden. Wegen des großen apparativen Aufwandes für die Ultrafiltration sind die vom Analysenprobenstrom durchflossenen dünnen Leitungen verhältnismäßig lang, so daß die Gefahr einer störenden Vermehrung von Mikroorganismen besteht.

Diese Gefahr wiederum macht es erforderlich, den Grad der Ultrafiltration so hoch zu wählen, daß möglichst wenige Keime von Mikroorganismen in den Analysenprobenstrom gelangen. Eine bei stark konzentriertem Abwasser erwünschte Verdünnung läßt sich bei der Ultrafiltration unter wirtschaftlichen Gesichtspunkten nicht durchführen, weil eine sehr große Verdünnungswassermenge benötigt würde. Für die Abwasseranalyse selbst kann durch die Ultrafiltration eine Verfälschung der Analaysenergebnisse verursacht werden, weil durch den extremen Filtrationsvorgang Stoffe ausgeschieden werden, die an sich von der Analyse erfaßt werden müßten.

Bei einem bekannten Abscheider (FR-A-2 525 771) bildet eine Öffnung in einer Kappe den Wasserzulauf und den Wasserablauf. Der Abscheider weist einen Rührkörper auf. Die Abscheideöffnungen sind in der Seite des Behälters angeordnet. Es besteht die Gefahr einer Verschmutzung der Abscheideöffnungen und der anschließenden Leitungen, insbesondere wenn nur ein sehr kleiner Analysenprobenstrom entnommen wird.

Bei einer bekannten Trennvorrichtung (Abscheider) der eingangs genannten Gattung (DE-A 23 33 008) besteht ebenfalls die Gefahr des Verschmutzens bzw. Zusetzens der Öffnungen bzw. Leitungen, durch die ein Probenstrom entnommen werden kann, insbesondere wenn dieser Probenstrom nur sehr klein ist. Die Strömung verläuft im wesentlichen in Umfangsrichtung; Ein Rührkörper ist nicht vorhanden.

Aufgabe der Erfindung ist es daher eine Trennvorrichtung der eingangs genannten Gattung zu schaffen, mit der ohne Ultrafiltration und die damit verbundenen Schwierigkeiten mit geringem apparativem Aufwand und Energieaufwand ein ausreichender Analysenprobenstrom aus Abwasser gewonnen werden kann.

Diese Aufgabe wird erfindungsgemäß dadurch gelöst, daß der Abscheidebehälter an seinem Behälterboden die die Abscheideöffnung aufweisende Trennwand bildet und daß ein angetriebener Rührkörper entlang der dem Abscheidebehälter zugekehrten, die Abscheideöffnung aufweisenden Fläche der Trennwand bewegbar ist.

Durch die Umfangs- oder Rotationsströmung des Abwassers im Abscheidebehälter werden die im Abwasser enthaltenen leichten Stoffe, insbesondere Fette, Öle und Flocken, in der Mitte des Abscheidebehälters und schwerere Stoffe, wie beispielsweise Sand, im Randbereich selektiert. Diese Stoffe werden mit dem Hauptstrom des aus dem Abscheidebehälter austretenden Abwassers abtransportiert.

Der Analysenprobenstrom wird an der den Behälterboden bildenden Trennwand durch die Abscheideöffnung abgezogen, die von einer oder mehreren einzelnen Blendenöffnungen gebildet werden kann, die jeweils den kleinsten Strömungsquerschnitt für den Analysenprobenstrom bildet bzw. bilden. Damit wird erreicht, daß sich Festkörper, die in die Abscheideöffnung eintreten, an keiner anderen Stelle des Strömungssystems festsetzen können. Der angetriebene Rührkörper, der sich über die Trennwand bewegt, reinigt die Oberseite der Trennwand und damit die Abscheideöffnung ständig, so daß ein Zusetzen verhindert wird und die Notwendigkeit einer regelmäßigen Reinigung entfällt.

Vorzugsweise liegt der Rührkörper frei beweglich auf der Trennwand und wird mittels eines magnetischen Rührwerksantriebs zu Drehbewegungen um die senkrechte Achse des Abscheidebehälters angetrieben. Dadurch erzeugt der Rührkörper zugleich die erwünschte tangentiale Strömung des Abwassers im Abscheidebehälter.

Stattdessen oder zusätzlich kann auch vorgesehen sein, daß der Abwasserzulauf tangential in den Abscheidebehälter mündet, um die tangentiale Strömung zu erzeugen bzw. zu unterstützen. Die Reinigung der die Abscheideöffnung bzw. Abscheideöffnungen aufweisenden Trennwand kann auch durch weitere Maßnahmen unterstützt werden, z. B. durch Ultraschall oder Rückspülung.

Gemäß einer bevorzugten Ausführungsform der Erfindung ist vorgesehen, daß der Rührkörper mit einem nach unten ragenden Drehzapfen verbunden ist, der mit radialem Spiel in die Abscheideöffnung ragt. Dieses radiale Spiel kann so gewählt werden, daß der so gebildete Spalt den gewünschten Durchtrittsquerschnitt für die Abscheideöffnung hat. Durch die ständige Drehbewegung des mit dem Rührkörper verbundenen Drehzapfens wird sichergestellt, daß der Durchtrittsspalt immer frei bleibt und daß sich darin keinerlei Verunreinigungen festsetzen können. Damit ist eine wirksame selbsttätige Reinigung der Abscheideöffnung sichergestellt.

Vorzugsweise ist der Drehzapfen zylindrisch und die Abscheideöffnung ist eine zylindrische Bohrung; der Innendurchmesser der Abscheideöffnung wird vorzugsweise etwa 0,1-0,6 mm größer gewählt als der Durchmesser des Drehzapfens, so daß beispielsweise ein Spalt mit einer Breite von 0,05-0,3 mm entsteht. Diese Abmessungen haben sich für die Untersuchung unterschiedlicher Abwässer als zweckmäßig erwiesen.

Um eine noch stärkere selbsttätige Reinigungswirkung zu erreichen, kann vorgesehen werden, daß die Trennwand an ihrer Oberseite mindestens eine Nockenfläche aufweist, die dem Rührkörper bei seiner Drehbewegung eine axiale Hubbewegung aufzwingt. Der Drehzapfen führt dadurch zusätzlich zu seiner Drehbewegung in der Abscheideöffnung axiale Hubbewegungen aus, die zu einer verbesserten Reinigungswirkung auch bei einem sehr engen Spalt führen.

Der Drehzapfen kann an seinem unteren, in die Probenkammer ragenden Ende eine Rührflosse aufweisen, durch die in der Probenkammer eine Rührbewegung bewirkt wird, ohne daß hierfür ein gesonderter Antrieb erforderlich wäre.

Gemäß einer bevorzugten Ausführung ist vorgesehen, daß mindestens im Abwasserzulauf eine Dosierpumpe zur geregelten Verdünnung des Abwassers mit Verdünnungswasser angeordnet ist. Besonders bei hohen Öl-, Fett-, Feststoff- oder Salzkonzentrationen ist es sinnvoll, den Abwasserzulauf definiert mit Verdünnungswasser zu verdünnen.

Vorzugsweise ist unter der Trennwand eine Probenkammer angeordnet, durch die der Analysenprobenstrom fließt. Ein zusätzlicher angetriebener Rührkörper kann in der Probenkammer angeordnet sein. Dies ist insbesondere vorteilhaft, wenn dem Analysenprobenstrom in der Probenkammer eine Reagenzflüssigkeit zugemischt wird.

Gemäß einer ersten Ausführungsform der Erfindung ist vorgesehen, daB die Probenkammer mit einer benachbart dazu angeordneten Analysenkammer, in der eine Analysensonde angeordnet ist, über eine Probenleitung verbunden ist, deren kleinster Leitungsquerschnitt größer als die Abscheideöffnung ist. Damit wird erreicht, daß sich in der Probenleitung keine Festkörper festsetzen können, die die Abscheideöffnung passiert haben. Durch die Anordnung der Analysenkammer in der Nähe der Probenkammer wird erreicht, daß die Länge der dazwischenliegenden Leitungen sehr gering ist. Für im Analysenprobenstrom mitgeführte Mikroorganismen steht daher keine ausreichende Zeit zur Vermehrung zur Verfügung.

Gemäß einer anderen, noch günstigeren Ausgestaltung des Erfindungsgedankens ist vorgesehen, daß eine Analysensonde unmittelbar in der Probenkammer angeordnet ist und eine Probenabflußleitung aus der Probenkammer herausgeführt ist, wobei in der Probenkammer ein zusätzlicher angetriebener Rührkörper angeordnet ist. Dieser zusätzliche Rührkörper erzeugt eine hohe Anströmgeschwindigkeit für die Analysensonde und bewirkt dadurch, daß Gasblasen von der Analysensonde ferngehalten werden, die bei der Reaktion mit der zugeführten Reagenzflüssigkeit auftreten können. Außerdem stellt die Probenkammer, in der durch den Rührkörper eine tangentiale Strömung erzeugt wird, einen nachgeschalteten, zweiten Abscheidebehälter dar, in dem insbesondere Öle und Fette abgeschieden werden.

Da die Analyse in der Probenkammer selbst erfolgt, kann die aus der Probenkammer herausgeführte Ablaufleitung mit verhältnismäßig großem Querschnitt ausgeführt werden, weil Zeitverzögerungen der Strömung in dieser Ablaufleitung keine Rolle mehr spielen.

Die Analysensonde und/oder eine andere nachgeschaltete Analyseneinrichtung ist vorzugsweise mit einem Rechner verbunden, der eine Dosiereinrichtung für das Abwasser und für das dem Abwasser zugeführte Frischwasser auf ein solches Verdünnungsverhältnis steuert, daß sich an der Analysensonde bzw. der Analyseneinrichtung ein konstanter MeBwert einstellt.

Die Verdünnung des Abwassers ist vor allem dann vorteilhaft, wenn eine hohe Abwasserkonzentration und/oder ein hoher Anteil an Feststoffen vorliegt. Durch die Steuerung des Verdünnungsverhältnisses in Abhängigkeit vom Analysenwert wird erreicht, daß die Analysensonde stets am gleichen Arbeitspunkt arbeitet, weil an der Analysensonde eine konstante Konzentration des zu analysierenden Stoffes eingestellt wird, beispielsweise eine konstante NH₃-Konzentration. Das jeweils eingestellte Verdünnungsverhältnis dient dabei als Anzeigewert für die Konzentration im Abwasser. Für die Kalibrierung wird nur eine bestimmte Kalibrierlösung benötigt.

Weitere vorteilhafte Ausgestaltungen des Erfindungsgedankens sind Gegenstand weiterer abhängiger Ansprüche.

Die Erfindung wird nachfolgend an Ausführungsbeispielen näher erläutert, die in der Zeichnung dargestellt sind. Es zeigt:
Fig. 1 eine erste Ausführungsform einer Trennvorrichtung zur Abscheidung eines Analysenprobenstroms aus Abwasser,
Fig. 2 eine abgewandelte Ausführung einer Trennvorrichtung mit einer nachgeschalteten Analysenkammer und mit Dosierpumpen zur Einregelung des Verdünnungsverhältnisses für das zugeführte Abwasser,
Fig. 3 eine Trennvorrichtung mit einer in der Probenkammer angeordneten Analysensonde,
Fig. 4 eine Ausführungsform einer Trennvorrichtung mit einer weiteren Probenkammer,
Fig. 5 eine Ausführungsform einer Trennvorrichtung mit einer Gaszufuhreinrichtung, einem nachgeschalteten Analysenofen und mit Dosierpumpen zur Einregelung des Verdünnungsverhältnisses für das zugeführte Abwasser,
Fig. 6 eine weitere abgewandelte Ausführungsform einer Trennvorrichtung in einem Teilschnitt, wobei der Rührkörper mit einem in die Abscheideöffnung ragenden Drehzapfen verbunden ist, und
Fig. 7 in einem vergrößerten Teilschnitt durch die den Drehzapfen aufnehmende Abscheideöffnung eine Ausführungsform mit Nockenflächen an der Oberseite der Trennwand.

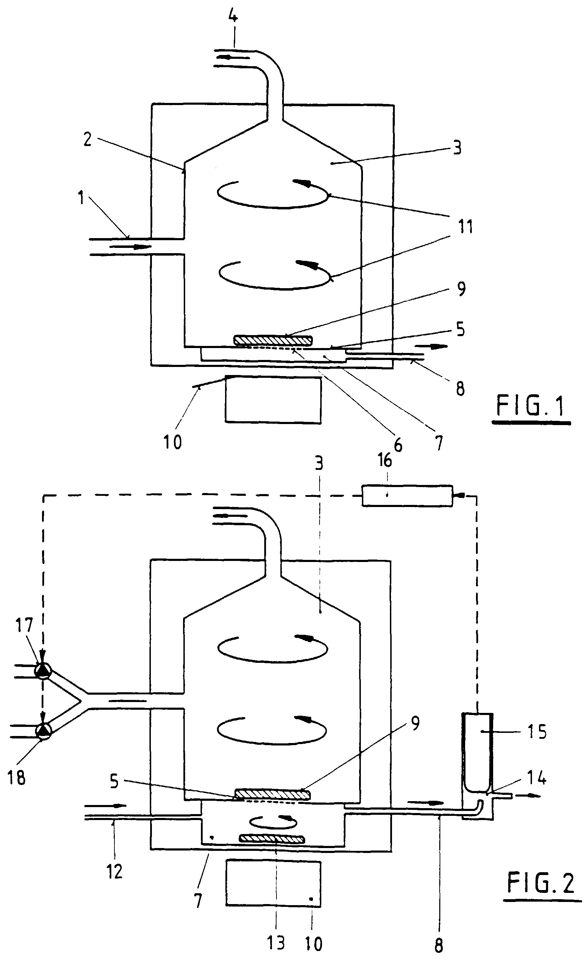

Fig. 1 zeigt in vereinfachter Darstellungsweise eine Trennvorrichtung, mit der ein Analysenprobenstrom aus Abwasser abgeschieden wird. Das zu analysierende Abwasser tritt durch einen Abwasserzulauf 1 im mittleren Bereich einer Seitenwand 2 in einen im wesentlichen zylindrischen, aufrechten Abscheidebehälter 3 ein. Im oberen Bereich des Abscheidebehälters 3 ist beispielsweise zentral ein Abwasserablauf 4 angeschlossen. Der Boden des Abscheidebehälters 3 bildet eine Trennwand 5, in der mehrere Abscheideöffnungen 6 nach Art von Blendenöffnungen vorgesehen sind. Unter der Trennwand 5 ist eine Probenkammer 7 angeordnet, aus der eine Abflußleitung 8 für den Analysenprobenstrom seitlich herausführt.

Ein Rührkörper 9, der beispielsweise als liegender, frei beweglicher Rührstab aus magnetisierbarem Material ausgeführt ist, liegt auf der vorzugsweise aus Edelstahl bestehenden Trennwand 5 und wird durch einen magnetischen Rührwerksantrieb 10 angetrieben, der sich unter der Probenkammer 7 und außerhalb des Abscheidebehälters 3 befindet.

Der Rührkörper 9 führt eine Drehbewegung angenähert um die senkrechte Achse des Abscheidebehälters 3 aus und erzeugt dadurch im Abscheidebehälter 3 eine mit Pfeilen 11 angedeutete tangentiale oder Rotationsströmung des Abwassers. Zugleich reinigt der Rührkörper 9 die Abscheideöffnungen 6 und verhindert somit ein Zusetzen durch Feststoffteilchen.

Die Lochweite der Abscheideöffnungen 6 braucht nur so klein gewählt zu werden, daß der Durchtritt von solchen Feststoffteilen verhindert wird, die die Funktion einer nachgeschalteten (in Fig. 1 nicht dargestellten) Analysensonde beeinträchtigen könnte. Der Querschnitt der Leitung 8 ist größer als der Querschnitt der Abscheideöffnungen 6, so daß sich Feststoffe, die durch die Abscheideöffnungen 6 hindurchgetreten sind, nicht in der Leitung 8 festsetzen können.

Durch die tangentiale Strömung des Abwassers in der Abscheidekammer 3 sammeln sich leichte Stoffe, wie Fette, Öle und Flocken im Bereich der Mittelachse des Abscheidebehälters 3 und gelangen unmittelbar nach oben zum Abwasserablauf 4. Schwerere Stoffe, wie Sand, sammeln sich im Bereich der Seitenwand 2 des Abscheidebehälters 3 und werden mit dem Abwasserstrom ebenfalls zum Abwasserablauf 4 transportiert. Im Bereich der Trennwand 5, insbesondere im Bereich der Abscheideöffnungen 6, stellt sich eine Abwasserphase ein, die weitgehend frei von Ölen, Fetten und Feststoffen ist und daher für die nachfolgende Analyse aufbereitet ist. Beim beschriebenen Ausführungsbeispiel wurde ein Abscheidebehältervolumen von 300 ml, einen Abwasserzulauf von 200 ml/min. und eine Rührkörperdrehzahl je nach Rührkörpergröße von 10 bis 25 Umdrehungen pro Sekunde gewählt. Dabei tritt eine wirkungsvolle Abscheidung von Fetten, Ölen und Flocken ein. Andere Kombinationen dieser Parameter sind möglich.

Bei dem in Fig. 2 dargestellten Ausführungsbeispiel werden dem in die Probenkammer 7 eintretenden Analysenprobenstrom über eine Reagenzzufuhrleitung 12 Reagenzien zugeführt, z.B. Laugen wie NaOH oder KOH. Damit wird der Analysenprobenstrom auf einen pH-Wert über 11 gebracht. Dadurch wird NH₄ in NH₃ überführt.

In der Probenkammer 7 ist ein zusätzlicher, ebenfalls frei beweglicher Rührkörper 13 angeordnet, der ebenso wie der Rührkörper 9 vom magnetischen Rührwerksantrieb 10 angetrieben wird. Der Rührkörper 13 bewirkt in der Probenkammer 7 eine intensive Mischung des Analysenprobenstroms mit der zugeführten Reagenzflüssigkeit. Diese Mischung wird über eine Probenleitung 8 einer benachbart dazu angeordneten Analysenkammer 14 zugeführt, in der eine Analysensonde 15 angeordnet ist, beispielsweise eine ionenselektive Sonde. Die Analysensonde 15 ist mit einem Rechner 16 verbunden, der eine Dosierpumpe 17 für das Abwasser und eine Dosierpumpe 18 für Frischwasser steuert. Das Frischwasser wird ebenfalls dem Abscheidebehälter 3 zugeführt.

Die Dosierpumpen 17, 18 werden in Abhängigkeit von dem Meßergebnis der Analysensonde 15 auf ein solches Verdünnungsverhältnis gesteuert, daß sich an der Analysensonde 15 eine konstante NH3-Konzentration einstellt. Das dabei eingestellte Verdünnungsverhältnis dient als Anzeigewert für die NH₄-Konzentration im Abwasser. Besonders bei hohen Öl-, Fett-, Feststoff- oder Salzkonzentrationen ist es sinnvoll, den Abwasserzulauf definiert mit Verdünnungswasser zu verdünnen.

Ein kleiner Leitungsquerschnitt ist hierbei nur in der verhältnismäßig kurzen Probenleitung 8 erforderlich. Da die dort fließende Analysenprobe bereits auf einen pH-Wert von mehr als 11 gebracht wurde, ist bei diesem Beispiel ein Wachstum von Mikroorganismen hier ausgeschlossen.

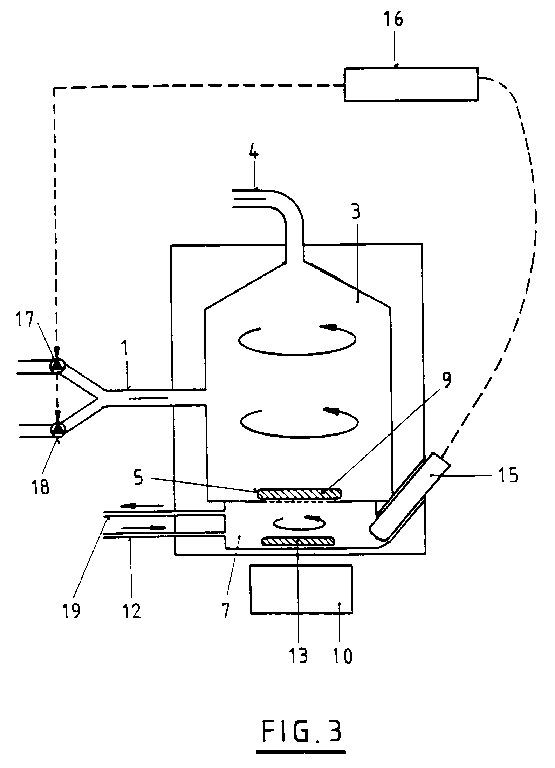

Das in Fig. 3 dargestellte Ausführungsbeispiel unterscheidet sich von dem Ausführungsbeispiel nach Fig. 2 nur dadurch, daß die Analysensonde 15 unmittelbar in die Probenkammer 7 ragt. Eine Probenabflußleitung 19 ist aus der Probenkammer 7 herausgeführt. Über die bereits beschriebene Reagenzzufuhrleitung 12 wird eine Reagenzflüssigkeit, beispielsweise Lauge, der Probenkammer 7 zugeführt. Die Drehbewegung des in der Probenkammer 7 angeordneten Rührkörpers 13 bewirkt einerseits eine erhöhte Anströmgeschwindikeit an der Membran der Analysensonde 15 und damit eine Reinigungswirkung; andererseits wird dadurch in der Probenkammer 7 eine Rotationsströmung erzeugt, durch die Öle und Fette von der am Umfang der Probenkammer 7 angeordneten Analysensonde 15 ferngehalten werden.

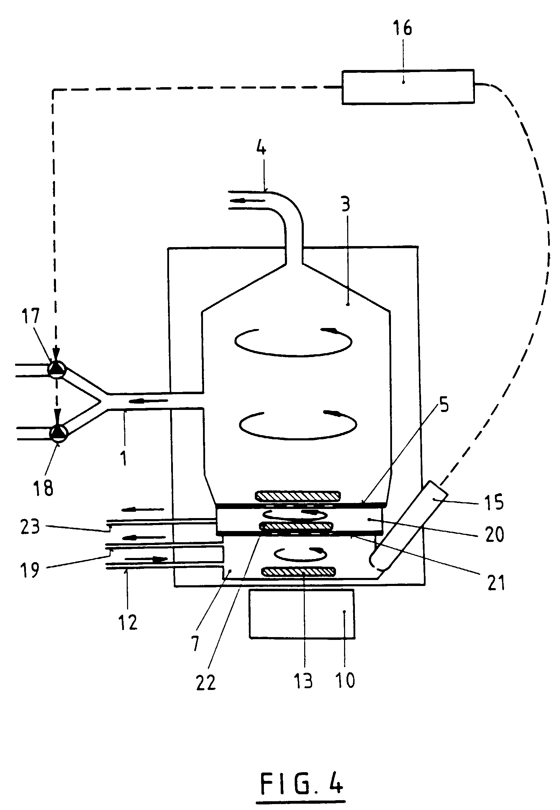

Hiervon unterscheidet sich das Ausführungsbeispiel nach Fig. 4 im wesentlichen dadurch, daß zwischen der den Boden des Abscheidebehälters 3 bildenden Trennwand 5 und der Probenkammer 7 eine weitere Probenkammer 20 angeordnet ist, deren Boden ebenfalls eine Trennwand 21 mit mindestens einer Abscheideöffnung bildet. Auf dieser Trennwand 21 liegt ebenfalls ein angetriebener Rührkörper 22.

Aus den beiden Probenkammern 7 und 20 sind Probenabflußleitungen 19 bzw. 23 herausgeführt. In die untere Probenkammer 7 mündet in der schon beschriebenen Weise die Reagenzzufuhrleitung 12. Die Analysensonde 15 ragt am Umfang in die untere Probenkammer 7.

Aus der oberen Probenkammer 20 wird über die Leitung 23 eine Analysenprobe abgezogen, deren pH-Wert noch nicht durch den Zusatz einer Reagenzflüssigkeit verändert wurde. Diese Analysenprobe kann beispielsweise für eine Kohlenstoffanalyse zur Ermittlung des Gesamtkohlenstoffwertes (TOC-Wert) verwendet werden. Diese Analysenprobe kann aber auch beispielsweise durch Zugabe von Phosphorsäure für die TOC-Analyse auf einen pH-Wert von 2 vorbereitet sein.

Über die Leitung 12 wird Natronlauge zugeführt, mit der die Flüssigkeit in der Probenkammer 7 auf einen ph-Wert von beispielsweise 11 gebracht wird, der für die mit der Analysensonde 15 durchgeführten Ammoniakanalysen erwünscht ist.

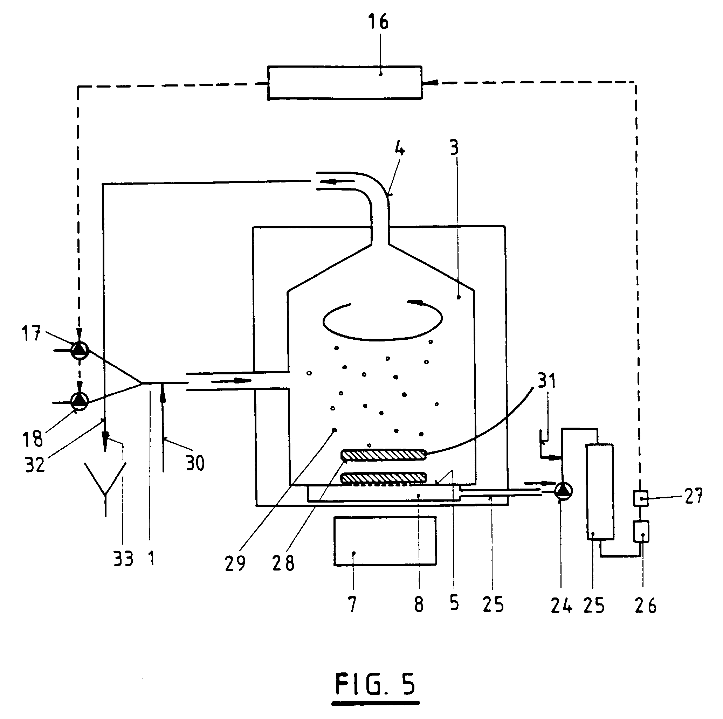

Bei dem in Fig. 5 schematisch dargestellten Ausführungsbeispiel wird der Analysenprobenstrom ähnlich wie beim Beispiel nach Fig. 1 über die Probenabflußleitung 8 aus der Probenkammer 7 abgezogen und über eine Pumpe 24 einem Ofen 25 zugeführt. Das Verbrennungsgas gelangt über eine Trocknungseinrichtung 26 zu einer Analyseneinrichtung 27, mit der eine C02-Analyse zur Ermittlung des Kohlenstoffgehalts durchgeführt wird.

Im Abscheidebehälter 3 ist über dem die Trennwand 5 bildenden Boden eine Gaszufuhreinrichtung 28 angeordnet, die mehrere verteilte Gasaustrittsöffnungen aufweist, aus denen ein im Abscheidebehälter 3 aufsteigender Schleier 29 von Gasblasen austritt. Dem durch den Abwasserzulauf 1 zufließenden Abwasserstrom wird über eine Säureleitung 30 eine Säure, beispielsweise Phosphorsäure zugeführt. Dadurch werden die im Abwasser vorhandenen Karbonate ausgetrieben.

Der im Abscheidebehälter 3 aufsteigende Gasschleier 29, beispielsweise Sauerstoff oder Stickstoff, nimmt die ausgefällten Karbonate mit und transportiert sie zum Abwasserablauf 4. Dadurch verfälschen die Karbonate das Ergebnis der TOC-Analyse nicht.

Zur Unterstützung der Ausgasung des Blasenschleiers 29 ist der Abwasserablauf 4 mit einer Ablauf-Heberleitung 32 verbunden, deren Austrittsmündung 33 tiefer als die Gasaustrittsöffnungen liegt. Dadurch wird ein die Gasbildung fördernder Unterdruck im Abscheidebehälter 3 erzeugt.

Auch bei der Vorrichtung nach Fig. 5 kann wie bei den Ausführungsbeispielen nach den Fig. 2 und 3 eine geregelte Verdünnung des Abwassers vorgesehen werden. Die Analyseneinrichtung 27 ist mit einem Rechner 16 verbunden, der eine Dosierpumpe 17 für das Abwasser und eine Dosierpumpe 18 für das dem Abscheidebehälter 3 zugeführte Frischwasser auf ein solches Verdünnungsverhältnis steuert, daß sich an der nachgeschalteten Analyseneinrichtung 27 ein konstanter Meßwert einstellt. Beim dargestellten Ausführungsbeispiel wird die CO₂-Konzentration im Ofen 25 konstant eingeregelt. Das sich dabei ergebende Verdünnungsverhältnis wird mit einer Konstanten multipliziert und ergibt den TOC-Wert im Abwasser. Diese Verdünnung ist vor allem bei hohen Salzgehalten oder hohen TOC-Konzentrationen des Abwassers zweckmäßig.

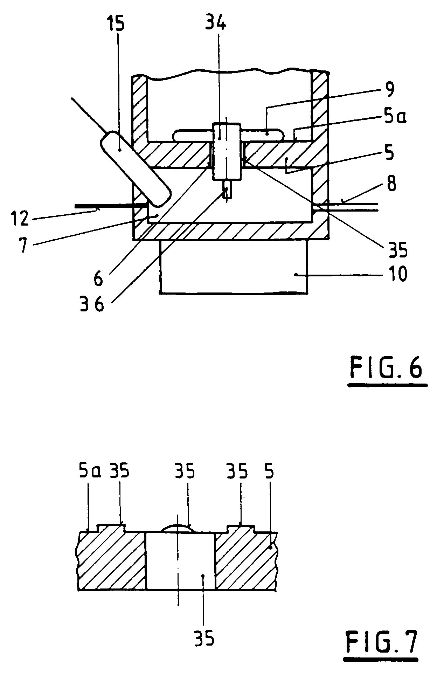

Die in Fig. 6 in einem Teilschnitt dargestellte abgewandelte Ausführungsform einer Trenneinrichtung unterscheidet sich von der Ausführungsform nach Fig. 1 dadurch, daß der Rührkörper 9, der beispielsweise ein auf der Oberseite 5a der Trennwand 5 liegender Rührstab aus magnetisierbarem Material ist, mit einem nach unten ragenden, zylindrischen Drehzapfen 34 verbunden ist. Der Drehzapfen 34 paßt mit geringem Spiel in eine zentrische zylindrische Bohrung 35 der Trennwand 5. Ein zwischen der Bohrung 35 und dem Drehzapfen 34 bestehender Spalt von beispielsweise 0,2 mm Breite bildet die Abscheideöffnung 6.

Bei der Drehbewegung des Rührkörpers 9 führt der Drehzapfen 34 eine Drehbewegung in der Bohrung 35 aus. Dadurch wird der die Abscheideöffnung 6 bildende Spalt ständig durchgängig gehalten. Der Antrieb des Rührkörpers 9 erfolgt wie beim Beispiel nach Fig. 1 durch den magnetischen Rührwerksantrieb 10, der sich auch hier unter der Probenkammer 7 befindet. In die Probenkammer 7 ragt die Analysensonde 15. Die Abflußleitung 8 für den Analysenprobenstrom ist seitlich aus der Probenkammer 7 herausgeführt.

Am unteren Ende des Drehzapfens 34, das in die Probenkammer 7 ragt, ist eine Rührflosse 36 ausgebildet. Diese Rührflosse 36, die in Fig. 6 in einer Stellung senkrecht zur Zeichenebene dargestellt ist, bewirkt eine Rührbewegung in der Probenkammer 7.

Zusätzlich zu der in Fig. 6 gezeigten Ausführung kann vorgesehen sein, daB die Trennwand 5 an ihrer Oberseite 5a in der Umgebung der Bohrung 35 eine oder mehrere Nockenflächen 37 aufweist (Fig. 7), über die der Rührkörper 9 bei seiner Drehbewegung läuft. Dadurch werden dem Rührkörper 9 bei seiner Drehbewegung axiale Hubbewegungen aufgezwungen, die er auch auf den damit fest verbundenen Drehzapfen 34 überträgt. Der Drehzapfen 34 führt dadurch in der Bohrung 35 sowohl eine Drehbewegung als auch axiale Hubbewegungen aus. Dadurch wird auch bei einem sehr engen Spalt eine gute Reinigungswirkung erzielt.

## Patentansprüche

1. Trennvorrichtung zur Abscheidung eines Analysenprobenstroms aus Abwasser mit einem vom Abwasser durchflossenen Abscheidebehälter, der einen Abwasserzulauf, einen Abwasserablauf und eine Trennwand mit mindestens einer Abscheideöffnung für den Durchtritt des Analysenprobenstroms aufweist, wobei der Abwasserstrom den Abschneidebehälter (3) im wesentlichen in einer Umfangsströmung durchfließt, dadurch gekennzeichnet, daß der Abscheidebehälter (3) an seinem Behälterboden die die Abscheideöffnung (6) aufweisende Trennwand (5) bildet und daß ein angetriebener Rührkörper (9) entlang der dem Abscheidebehälter (3) zugekehrten, die Abscheideöffnung (6) aufweisenden Fläche der Trennwand (5) bewegbar ist.

2. Trennvorrichtung nach Anspruch 1, dadurch gekennzeichnet, daß unter der Trennwand (5) eine Probenkammer (7) angeordnet ist, durch die der Analysenprobenstrom fließt.

3. Trennvorrichtung nach Anspruch 1, dadurch gekennzeichnet, daß der Rührkörper (9) frei beweglich auf der Trennwand (5) liegt und mittels eines magnetischen Rührwerksantriebs (10) zu Drehbewegungen um die senkrechte Achse des Abscheidebehälters (3) antreibbar ist.

4. Trennvorrichtung nach Anspruch 3, dadurch gekennzeichnet, daß der Rührkörper (9) mit einem nach unten ragenden Drehzapfen (34) verbunden ist, der mit radialem Spiel in die Abscheideöffnung (6) ragt.

5. Trennvorrichtung nach Anspruch 4, dadurch gekennzeichnet, daß der Drehzapfen (34) zylindrisch ist, daß die Abscheideöffnung (6) eine zylindrische Bohrung ist und daß der Innendurchmesser der Abscheideöffnung etwa 0,1-0,6 mm größer ist als der Durchmesser des Drehzapfens (34).

6. Trennvorrichtung nach Anspruch 4, dadurch gekennzeichnet, daß die Trennwand (5) an ihrer Oberseite (5a) mindestens eine Nockenfläche (35) aufweist, die dem Rührkörper (9) bei seiner Drehbewegung eine axiale Hubbewegung aufzwingt.

7. Trennvorrichtung nach Anspruch 4, dadurch gekennzeichnet, daß der Drehzapfen (34) an seinem unteren, in die Probenkammer (7) ragenden Ende eine Rührflosse (36) aufweist.

8. Trennvorrichtung nach Anspruch 1, dadurch gekennzeichnet, daß der Abwasserzulauf (1) tangential in den Abscheidebehälter (3) mündet.

9. Trennvorrichtung nach Anspruch 1, dadurch gekennzeichnet, daß mindestens im Abwasserzulauf (1) eine Dosierpumpe (17) zur geregelten Verdünnung des Abwassers mit Verdünnungswasser angeordnet ist.

10. Trennvorrichtung nach Anspruch 2, dadurch gekennzeichnet, daß in der Probenkammer (7) ein zusätzlicher angetriebener Rührkörper (13) angeordnet ist.

11. Trennvorrichtung nach Anspruch 2, dadurch gekennzeichnet, daß die Probenkammer (7) mit einer benachbart dazu angeordneten Analysenkammer (14), in der eine Analysensonde (15) angeordnet ist, über eine Probenleitung (8) verbunden ist, deren kleinster Leitungsquerschnitt größer als die Abscheideöffnung (6) ist.

12. Trennvorrichtung nach Anspruch 2, dadurch gekennzeichnet, daß eine Analysensonde (15) unmittelbar in der Probenkammer (7) angeordnet ist und eine Probenabflußleitung (19) aus der Probenkammer (7) herausgeführt ist.

13. Trennvorrichtung nach Ansprüchen 1, 11 oder 12, dadurch gekennzeichnet, daß die Analysensonde (15) und/oder eine nachgeschaltete Analyseneinrichtung (27) mit einem Rechner (16) verbunden ist, der eine Dosiereinrichtung (17) für das Abwasser und für das dem Abscheidebehälter (3) zugeführte Frischwasser auf ein solches Verdünnungsverhältnis steuert, daB sich an der Analysensonde (15) bzw. an der nachgeschalteten Analyseneinrichtung (27) ein konstanter MeBwert einstellt.

## Claims

1. Separating device for separating an analytical sample stream from waste water using a separation container through which waste water flows, having a waste water feed, a waste water discharge and a partition with at least one separation opening for the analytical sample stream to pass through, where the stream of waste water flows through the separation container (3), essentially in a peripheral flow, characterised in that the separation container (3) forms at its base, the partition (5) comprising the separation opening (6) and that a powered agitator (9) can move along the face of the partition (5) facing the separation container (3) and comprising the separation opening (6).

2. Separating device according to claim 1 characterised in that located beneath the partition (5) is a sample chamber (7) through which the analytical sample stream flows.

3. Separating device according to claim 1, characterised in that the agitator (9) rests against the partition (5) where it can move freely and can be driven by a magnetic agitator drive (10) to make rotary movements around the vertical axis of the separation container (3).

4. Separating device according to claim 3, characterised in that the agitator (9) is connected to a centre pin (34) which projects downwards, and which projects into the separation opening (6) with radial play.

5. Separating device according to claim 4, characterised in that the centre pin (34) is cylindrical, that the separation opening (6) is a cylindrical hole and that the internal diameter of the separation opening is roughly 0.1 - 0.6 mm larger than the diameter of the centre pin (34).

6. Separating device according to claim 4, characterised in that the partition (5) has on its top edge (5a) at least one cam face (35) which forces the agitator (9) to make an axial lifting movement while it is rotating.

7. Separating device according to claim 4, characterised in that the centre pin (34) has an agitator fin (36) on its lower end which projects into the sample chamber (7).

8. Separating device according to claim 1, characterised in that the waste water supply (1) merges tangentially into the separation container (3).

9. Separating device according to claim 1, characterised in that a metering pump (17) is located at least in the waste water supply (1) in order to provide controlled dilution of the waste water with water.

10. Separating device according to claim 2, characterised in that an additional powered agitator (13) is located in the sample chamber (7).

11. Separating device according to claim 2, characterised in that the sample chamber (7) is connected to an adjacent analysis chamber (14), in which an analysis probe (15) is located, by way of a sample pipe (8), the smallest cross-section of which is larger than the separating opening (6).

12. Separating device according to claim 2, characterised in that an analysis probe (15) is located directly in the sample chamber (7), and a sample discharge pipe (19) is taken out from the sample chamber (7).

13. Separating device according to claims 1, 11 or 12, characterised in that the analysis probe, (15) and/or a downstream analysis device (27) is linked to a computer (16) which controls a metering device (17) for the waste water and for the fresh water supplied to the separation container (3), so as to provide a dilution ratio that enables a constant measured value to be obtained at the analysis probe (15) or at the downstream analysis device (27).

## Revendications

1. Dispositif de séparation d'un flux d'échantillons d'analyse d'eaux usées, comprenant une cuve séparatrice traversée par les eaux usées, qui comprend une admission d'eaux usées, une évacuation d'eaux usées et une paroi séparatrice présentant au moins une ouverture séparatrice pour le passage du flux d'échantillons d'analyse, dispositif dans lequel le flux d'eaux usées s'écoule à travers la cuve séparatrice (3) sensiblement selon un écoulement tangentiel, caractérisé en ce que la cuve séparatrice (3) forme sur son fond la paroi séparatrice (5) présentant l'ouverture séparatrice (6) et en ce qu'un agitateur entraîné (9) peut être déplacé le long de la surface de la paroi séparatrice (5) tournée vers la cuve séparatrice (3) et présentant l'ouverture séparatrice (6).

2. Dispositif de séparation selon la revendication 1, caractérisé en ce qu'on agence sous la paroi séparatrice (5) une chambre d'échantillonnage (7) à travers laquelle le flux d'échantillons d'analyse s'écoule.

3. Dispositif de séparation selon la revendication 1, caractérisé en ce que l'agitateur (9) s'applique sur la paroi séparatrice (5) de manière à pouvoir se déplacer librement et est entraîné au moyen d'un moteur d'agitation magnétique (10) dans des mouvements de rotation autour de l'axe vertical de la cuve séparatrice (3).

4. Dispositif de séparation selon la revendication 3, caractérisé en ce que l'agitateur (9) est raccordé à un pivot (34) s'étendant vers le bas qui est engagé dans l'ouverture séparatrice (6) avec un certain jeu radial.

5. Dispositif de séparation selon la revendication 4, caractérisé en ce que le pivot (34) est cylindrique, en ce que l'ouverture séparatrice (6) est un orifice cylindrique et en ce que le diamètre interne de l'ouverture séparatrice est environ 0,1 à 0,6 mm plus grand que le diamètre du pivot (34).

6. Dispositif de séparation selon la revendication 4, caractérisé en ce que la paroi séparatrice (5) présente sur sa face supérieure (5a) au moins une surface de came (35) qui impose à l'agitateur (9) un mouvement axial en hauteur lors de son mouvement de rotation.

7. Dispositif de séparation selon la revendication 4, caractérisé en ce que le pivot (34) présente une ailette d'agitation (36) à son extrémité inférieure faisant saillie dans la chambre d'échantillonnage (7).

8. Dispositif de séparation selon la revendication 1, caractérisé en ce que l'admission d'eaux usées (1) débouche tangentiellement dans la cuve séparatrice (3).

9. Dispositif de séparation selon la revendication 1, caractérisé en ce qu'on agence, au moins dans l'admission d'eaux usées (1), une pompe de dosage (17) pour régler la dilution des eaux usées avec de l'eau de dilution.

10. Dispositif de séparation selon la revendication 1, caractérisé en ce qu'on agence dans la chambre d'échantillonnage (7) un agitateur entraîné supplémentaire (13).

11. Dispositif de séparation selon la revendication 2, caractérisé en ce que la chambre d'échantillonnage (7) est raccordée à une chambre d'analyse (14) agencée à proximité à cet effet, dans laquelle est agencée une sonde d'analyse (15), via une conduite d'échantillonnage (8) dont la section transversale la plus petite est plus grande que celle de l'ouverture séparatrice (6).

12. Dispositif de séparation selon la revendication 2, caractérisé en ce qu'une sonde d'analyse (15) est agencée directement dans la chambre d'échantillonnage (7) et une conduite d'évacuation d'échantillons (19) sort de la chambre d'échantillonnage (7).

13. Dispositif de séparation selon les revendications 1, 11 ou 12, caractérisé en ce que la sonde d'analyse (15) et/ou un dispositif d'analyse (27) disposé en aval sont connectés à un ordinateur (16) qui commande un dispositif de dosage (17) des eaux usées et de l'eau fraîche ajoutée à la cuve séparatrice (3) pour établir un taux de dilution tel qu'une valeur de mesure constante soit réglée sur la sonde d'analyse (15) ou sur le dispositif d'analyse agencé en aval.
